# EUROPÄISCHE PATENTSCHRIFT

(11) **EP 2 326 900 B1**
(45) Veröffentlichungstag und Bekanntmachung des Hinweises auf die Patenterteilung: **15.07.2015**
(21) Anmeldenummer: 09782709.1
(22) Anmeldetag: 07.09.2009
(51) Int. Cl.: F26B 17/04

(54) **VERFAHREN UND VORRICHTUNG ZUM TROCKNEN VON BIOMASSE**
METHOD AND DEVICE FOR DRYING BIOMASS
PROCÉDÉ ET DISPOSITIF DE SÉCHAGE DE BIOMASSE

(30) Priorität: 09.09.2008 DE 102008046299
(43) Veröffentlichungstag der Anmeldung: 01.06.2011
(73) Patentinhaber: Werner, Hans, 81825 München (DE)
(72) Erfinder: SCHLEDERER, Swantje Mignon, 85567 Grafing (DE); HAUCK, Michael, 81827 München (DE)
(74) Vertreter: Leske, Thomas
(86) Internationale Anmeldenummer: PCT/EP2009/061570
(87) Internationale Veröffentlichungsnummer: WO 2010/029045

(56) Entgegenhaltungen:
- DE-A1- 3 037 438
- DE-A1- 3 321 178
- DE-C- 505 772
- FR-A- 906 543
- FR-A1- 2 372 401
- US-A- 2 395 933

## Beschreibung

Die Erfindung betrifft ein Verfahren zur Trocknung von Biomasse mittels eines Trocknungsmediums und eine Vorrichtung zur Durchführung dieses Verfahrens.

Biomasse, die beispielsweise zu Brennstoff verarbeitet werden soll, durchläuft ausgehend vom Anfall, der Ernte oder der Aufsammlung bis hin zu ihrem Einsatz als nutzbarer Energieträger einen Prozess, in welchem aus der feuchten, zum Teil nassen Biomasse nach einem Trockenvorgang beispielsweise Granulate, Presslinge, Pellets, Briketts oder Ähnliches hergestellt werden. Neben beispielsweise einem ersten oder wiederholten Auspressen und Zerkleinern der Biomasse ist das Trocknen der Biomasse ein wesentlicher Bestandteil des Energieträger-Herstellungsprozesses.

Oftmals wird gepresste Biomasse als Brennstoff eingesetzt, wobei es hier besonders darauf ankommt, der Biomasse im Herstellungsprozess die inhärente Feuchtigkeit zu entziehen, damit die hergestellten Granulate, Presslinge, Pellets, Briketts etc. bestehend aus Biomasse einen geringen Feuchtigkeitsgehalt aufweisen. Neben dem Merkmal der effektiven Trocknung der Biomasse, ist auch auf die Effizienz, das heißt auf einen möglichst geringen Energieaufwand bei dem Trocknungsverfahren zu achten. Besonders zum gegenwärtigen Zeitpunkt, bei dem Preissteigerungen von Energiekosten von größter Bedeutung sind, sowie der immer größer werdenden Nachfrage nach nachwachsenden Rohstoffen aufgrund schwindender Ressourcen muss den Themen Kosten, Umwelt, Energie sowie dem Faktor Zeit zunehmend immer mehr Bedeutung geschenkt werden.

Im allgemeinen Stand der Technik werden trotz dieser Probleme oftmals Trommeltrockner eingesetzt. Die sich im Trockner drehenden Trommeln ermöglichen den leichter zu trocknenden Anteilen des Gutes, wie beispielsweise Blätter und Heu, durch stetiges Wirbeln und Heben und durch andauernde Luftsichtung rechtzeitig ausgetragen werden zu können, wobei beispielsweise Stängel und dergleichen bis zum vollständigen Trocknen weiterhin mit Heißluft belüftet werden. Ein Nachteil dieser Art der Trocknung besteht jedoch darin, dass für eine effektive Trocknung sehr heiße Eingangsluft von ca. 800°C eingeleitet werden muss, was einen hohen Energieaufwand mit sich bringt.

DE 2 211 568 A umfasst eine Vorrichtung zur Trocknung von Schüttgütern, bestehend aus einer Vortrocknungszone bzw. einer Aufbereitungszone und einer Endtrockenzone. Die Vortrocknungs- und Aufbereitungszone besteht aus einem Schüttkanal, den das Schüttgut kommend aus einem Vorratsbehälter durchläuft. Die Endtrockenzone besteht aus einem Transportband, das senkrecht zur Transportrichtung des Schüttguts in der Vortrocknungs- und Aufbereitungszone verläuft und auf dem das Schüttgut die Endtrockenzone durchwandert.

Während des Durchlaufens der Vortrocknungs- und Aufbereitungszone wird das Schüttgut mit Warm- und/oder Heißluft durchströmt. Die Anströmung des Schüttgutes im Schüttkanal erfolgt durch Warmluft von einer Seite und durch Heißluft von der anderen Seite. Dieser Vorgang soll zum einen der Vortrocknung des Gutes und zum anderen der Auflockerung der Schüttgutteilchen dienen.

Bei der Warm- und/oder Heißluft, welche in der Vortrocknungs- und Aufbereitungszone zum Vortrocknen verwendet wird, handelt es sich um ungenügend mit Feuchtigkeit gesättigte Luft, die der Endtrockenzone an zwei Stellen mittels trichterförmiger Abdichtungen entnommen wird und der Vortrocknungs- und Aufbereitungszone zugeführt wird.

Die Luftmenge der Endtrockenzone kommt aus einer Frischluft-Aufbereitungsanlage über Trichter in die Endtrockenzone und trifft, sobald das Schüttgut die Vorbereitungs- und Aufbereitungszone verlassen hat und auf das Band fällt, mit dem zu trocknenden Gut zusammen. In gleicher Transport- bzw. Luftstromrichtung durchlaufen dann das Schüttgut und die Warm- bzw. Heißluft die Endtrockenzone, wobei die Trocknungsluft über die gesamte Breite der Trocknungsfläche des Trocknungsgerätes eingeleitet wird. Gleichzeitig werden die Schüttgutteilchen während des Lufteinleitens durchgemischt. Auch die in der Trocknungszone angebrachten Wende- und Mischeinrichtungen sollen dieser Maßnahme dienen.

Anders verhält sich der Aufbau gemäß der DE 43 01 993. Das Trocknungsgut, bestehend aus Emtegütem wie Gräsern, Blättern und Halmen, durchläuft zuerst eine mechanische Aufstechvorrichtung und passiert dann eine Mikrowellenbaueinheit, bevor das Gut in die Trocknungsanlage gelangt.

In der Aufstechvorrichtung wird das Gut gelockert, zerkleinert und anschließend zu einem ununterbrochenen Gutteppich ausgeformt. Nachdem der Gutteppich erstellt wurde, wird er der Mikrowellenbaueinheit zum Zellaufschluss zugeführt. Im Bandtrockner selbst, in dem zwei Transportbänder mäanderartig ineinanderlaufen, wird das Gut im Kreuzstrom, quer zur Gutförderanlage, mittels warmer Luft getrocknet.

Die beiden ineinander angeordneten Transportbänder dienen dazu, dass das Trocknungsgut, welches zwischen den Bändern eingeklemmt ist, eine konstante Schichtdicke während des Trockenvorgangs beibehält und, dass das Gut in Form eines Teppichs leicht befördert werden kann.

Der mäanderartige Verlauf der Bänder dient zur Trennung des Trockners in verschiedene Trocknungsbereiche, den Saugbereich und den Druckbereich. Der Saugbereich bildet dabei den Teil des Trockners, in dem die Luft mittels Lufteinlasszonen von einer Auslauffördereinrichtung bis zu Axialventilatoren strömt, die in der Mitte des Trockners angebracht sind und die Luft ansaugen.

Die gesamte angesaugte Luftmenge wird dann mittels einer im Ansaugbereich des Ventilators befindlichen Lufteinlasszone mit beheizter Luft beaufschlagt und im Kreuzstrom quer zu den Gutförderanlagen durch das Trocknungsgut geleitet. Dieser Teil des Trockners, ausgehend von den Ventilatoren bis zu der Einlauffördereinrichtung, wird als Druckbereich bezeichnet.

EP 0 719 996 A1 beschreibt ein Verfahren und eine zugehörige Vorrichtung, bei dem beispielsweise Erntegüter und Futterstoffe in einer Anlage mit Bandförderung unter energieeinsparenden und umweltverträglichen Aspekten getrocknet werden sollen. Um eine vollständige Trocknung der Erntegüter und der Futterstoffe zu ermöglichen, wird bis zu 400°C warme Luft auf das Gut geleitet, wobei das Gut nur solange mit Wärme beaufschlagt wird, bis der entsprechende niedrige Feuchtegehalt des Gutes erzielt worden ist, ohne dass das Gut dabei Schaden nimmt, beispielsweise durch Sprödigkeit oder gar Verbrennung.

Bei diesem Verfahren wird Luft als Trocknungsmedium mit weit geringerer Wärme verwendet als im allgemeinen Stand der Technik, wobei ein ebenso vollständiger Effekt der Trocknung, wie bei der Trommeltrocknung, selbst bei Stängeln und dergleichen, erzielt wird. Der Trocknungsvorgang ist hierbei in einen ersten Trocknungsabschnitt und einen zweiten Trocknungsabschnitt unterteilt. Im ersten Trocknungsabschnitt erfolgt das Einleiten von warmer und trockener Luft am Einlass des Trocknungsgutes auf das nasse Gut und im zweiten Trocknungsabschnitt erfolgt das Einleiten von warmer und trockener Luft am Auslass des trockenen Trocknungsgutes. Die feuchte Luft wird dann nach Durchlaufen des jeweiligen Trocknungsabschnitts etwa mittig des Förderbandes abgeleitet. Das Trocknungsgut wird während der Trocknung von einem einzigen Förderband durch beide Trocknungsabschnitte gefördert.

Der am Einlass eingeleitete Luftstrom strömt in Förderrichtung des Gutes, ausgehend vom Beginn des Förderbandes bis zu dessen Mitte und trocknet so das nasse Gut vor. Der Luftstrom im ersten Abschnitt des Förderbandes wird dabei als Gleichstrom bezeichnet. Der im zweiten Abschnitt befindliche Luftstrom, der am Ausgang des trockenen Gutes eingeleitet wird, strömt entgegen der Förderrichtung des Gutes und wird folglich als Gegenstrom bezeichnet. Der Gegenstrom wird beispielsweise mit Hilfe eines Ventilators durch Sogwirkung erzeugt. In der Mitte des Förderbandes treffen beide Luftströme aufeinander, wobei der Luftstrom aus der ersten Strömungszone meist eine höhere Feuchtigkeit besitzt, also stärker gesättigt ist, als der Luftstrom aus der zweiten Strömungszone.

Die Anwendung zweier in den Trockner eingeleiteter Luftströme ermöglicht, die Temperatur der beiden Luftströme je nach Gut, Feuchtegrad und Zone variabel einzustellen. So wird das Gut in der ersten Strömungszone beispielsweise mit heißerer Luft durchströmt als in der zweiten Strömungszone, sollte es sich bei dem zu trocknenden Gut z. B. um Erntegüter handeln.

Allerdings hat diese Trockenanlage auch Nachteile: etwa den sehr hohen Energieaufwand zur Erwärmung der Luft auf bis zu 400°C. Der hohe Energieaufwand resultiert aber auch daraus, dass die Anlage große Mengen an warmer Luft verbraucht, wobei die Trocknungsluft der Strömungszonen beim Verlassen des Trockners zum Teil nur gering gesättigt ist. Beispielsweise bei der Trocknung von Blättern, welche bereits in der ersten Strömungszone beinahe vollständig getrocknet werden, und somit kaum noch Feuchtigkeit am Ende der ersten Strömungszone besitzen, wird fast trockene Luft aus dem zweiten Trocknungsabschnitt abgeleitet. Die Feuchtigkeitsaufnahmefähigkeit der zuvor erwärmten Luft des Gegenstroms wird demnach längst nicht ausgeschöpft, da der Sättigungsgrad der Luft am Ende des ersten Trocknungsabschnitts die Menge der einzusetzenden Luft für beide Trocknungsabschnitte bestimmt.

Ein weiterer Nachteil des Verfahrens gemäß EP 0 719 996 A1 stellt sich in der ungleichmäßigen Trocknung des Gutes dar. Dies tritt deshalb auf, da bevorzugt die obere Schicht des auf dem Förderband befindlichen Gutes getrocknet wird. Es kommt nur der Teil des Gutes mit warmer Luft in Berührung, der mit dem Förderband nicht in Kontakt ist und sich gleichzeitig an der Oberfläche des Biomassestroms befindet. Daraus ergibt sich ein weiterer Nachteil dieses Verfahrens, der darin besteht, dass aufgrund der nur oberflächenhaften Trocknung nur geringe Schüttguthöhen getrocknet werden können, da der nicht mit der Luft in Berührung kommende Kern des Trocknungsgutes mit zunehmender Schichtdicke feuchter bleibt und nicht getrocknet wird.

Im Hinblick auf den Aspekt der ungleichmäßigen Trocknung wird in der WO 2008/083 703 ein Mechanismus in einem Trockner eingebaut, der dafür sorgt, das Gut umzuwälzen bzw. zu bewegen oder aufzulockern, so dass eine Oberflächenvergrößerung des Gutes erfolgt. Die Trocknung selbst ist über ein Steuerungssystem gesteuert, welches vor jedem Trocknungsvorgang Daten, wie Temperatur, Durchsatz an Trocknungsgut und Feuchte der Luft, ermittelt. Dies ist für ein Mischgut (inhomogenes Trocknungsmaterial) kaum zu ermitteln, das sowohl feine als auch grobe Bestandteile aufweist.

Die DE 3321 178 A1 offenbart ein Verfahren zur Trocknung feuchter Biomasse gemäß dem Oberbegriff des Anspruchs 1.

Die DE 3037438 A1 offenbart eine Vorrichtung gemäß dem Oberbegriff des Anspruchs 7.

Aufgabe der Erfindung ist es daher, ein Verfahren zur Trocknung von Biomasse sowie eine Vorrichtung hierfür bereitzustellen, mittels welchem bzw. welcher, die in die Vorrichtung eingeleitete Biomasse auf energiesparende und umweltschonende Weise gleichmäßig in einem einfach steuerbaren Verfahren getrocknet wird. Gleichzeitig soll ein Biomassetrockner bereitgestellt werden, der einen einfachen Aufbau aufweist und mit dem große Schüttguthöhen effizient getrocknet werden können.

Die Aufgabe wird durch das erfindungsgemäße Verfahren gemäß Anspruch 1 sowie durch die erfindungsgemäße Vorrichtung gemäß Anspruch 7 gelöst. Die sich jeweils daran anschließenden Unteransprüche sind auf weitere Ausführungsformen gerichtet.

Zur Lösung der Aufgabe wird ein Verfahren vorgeschlagen, bei welchem feuchte Biomasse mittels Einleiten eines Trocknungsmediums in einem Mehrzonentrockner getrocknet wird. Der Mehrzonentrockner ist hierbei in eine Vortrocknungszone und eine Endtrocknungszone aufgeteilt. Die feuchte Biomasse wird zunächst der Vortrocknungszone zugeführt und von einer Fördereinrichtung durch die selbige bis zu der Endtrocknungszone transportiert. In der Endtrocknungszone wird die vorgetrocknete Biomasse von einer weiteren Fördereinrichtung durch die Endtrockenzone transportiert und am Ende der Endtrocknungszone aus dem Mehrzonentrockner ausgeleitet.

Vorzugsweise sind die Vortrocknungszone und die Endtrocknungszone übereinander im Mehrzonentrockner angeordnet, so dass die Vortrocknungszone oberhalb der Endtrocknungszone angeordnet ist. Biomasse, die durch die Vortrocknungszone befördert wird, kann so am Ende der Vortrocknungszone auf Grund ihres Eigengewichts von der Fördereinrichtung der Vortrocknungszone auf die Fördereinrichtung der Endtrocknungszone fallen. Für eine kompakte Bauweise des Mehrzonentrockners können die Förderrichtungen (Transportrichtungen) der Fördereinrichtungen der Vortrocknungszone und der Endtrocknungszone entgegengesetzt angeordnet sein. Jedoch können die Förderrichtungen der beiden Fördereinrichtungen auch in die gleiche Richtung zeigen, genauso ist eine Anordnung der Fördereinrichtungen nebeneinander vom Erfindungsgedanken umfasst.

In einer weiteren Ausführungsform ist es möglich und ebenfalls vom Erfindungsgedanken umfasst, mehrere Fördereinrichtungen in der Vortrocknungszone und/oder mehrere Fördereinrichtungen in der Endtrocknungszone anzuordnen, wobei die einzelnen Fördereinrichtungen innerhalb der Trocknungszonen übereinander oder nebeneinander angeordnet sein können.

Vorzugsweise werden die beiden Trocknungszonen von einem Gehäuse so umgeben, dass eingeleitete Luft beide Trocknungszonen nacheinander durchströmt, bevor das Trocknungsmedium wieder aus dem Mehrzonentrockner ausströmt.

Bei dem einzuleitenden Trocknungsmedium handelt es sich üblicherweise um Luft, wobei auch andere Gase zum Einsatz kommen können. Im nachfolgenden Teil wird Luft beispielhaft als Trocknungsmedium verwendet, da Luft als Trocknungsmedium ohne weitere Aufwendungen hinsichtlich beispielsweise der Dichtigkeit des Mehrzonentrockners verwendet werden kann und somit die Beschreibung des erfindungsgemäßen Verfahrens bzw. der erfindungsgemäßen Vorrichtung vereinfacht wird. Es soll hier aber nochmals darauf hingewiesen werden, dass das erfindungsgemäße Verfahren bzw. die erfindungsgemäße Vorrichtung auch mit von Luft abweichenden Gasen betrieben werden kann. Hierzu sind gegebenenfalls geeignete Maßnahmen zu ergreifen, um ein unkontrolliertes Abströmen des eingesetzten Gases zu vermeiden.

Die in den Mehrzonentrockner eingeleitete Luft wird erfindungsgemäß - gesehen in Gravitationsrichtung - unten in den Biomassetrockner eingeleitet und weiter bevorzugt unterhalb der Fördereinrichtung der Endtrockenzone eingeleitet.

Die zugeführte Luft befindet sich bei Einleitung in einem angewärmten und trockenen Zustand, wobei die Luft wegen des Effektes der Konvektion bestrebt ist, nach oben zu strömen. Durch die geeignete Ausgestaltung der Fördereinrichtung der Endtrockenzone durchströmt die warme trockene Luft die auf der Fördereinrichtung der Endzone befindliche Biomasse und trocknet diese, ohne dass dabei der Sättigungsgrad der Luft an Feuchtigkeit erreicht wird. Durch angeordnete Luftleitvorrichtungen bzw. Luftführungseinrichtungen unterhalb der Fördereinrichtung der Endtrockenzone kann der zugeführte Luftstrom über die Länge der Fördereinrichtung, gesehen in/gegen Förderrichtung, verteilt werden.

Der im unteren Bereich des Mehrzonentrockners seitlich und/oder von unten zugeführte Luftstrom wird also durch Eigenkonvektion und/oder durch Führung mittels Luftführungseinrichtungen im Kreuzstrom durch die auf der Fördereinrichtung der Endtrocknungszone befindliche Biomasse hindurchtreten und der Biomasse Feuchte entziehen.

Im Weiteren strömt die bereits angefeuchtete Luft durch Eigenkonvektion und gegebenenfalls unterstützt durch Luftfördereinrichtungen und gegebenenfalls durch Luftführungseinrichtungen zur Vortrockenzone, die von dem Luftstrom entgegen der Förderrichtung der Biomasse durchströmt wird. Der Luftstrom, der am Ende der Vortrocknungszone bereits Feuchtigkeit der Biomasse in der Endtrockenzone aufgenommen hat - wobei der Sättigungsgrad an Feuchtigkeit noch nicht erreicht ist - kann nun in der Vortrocknungszone die dort befindliche feuchte/nasse Biomasse zumindest antrocknen und anwärmen. Das Gegenstromprinzip der Luftführung mit der Biomasse ermöglicht auch die Erhöhung der Schichtdicke der zu trocknenden Biomasse, wodurch der Durchsatz durch den Trockner erheblich verbessert werden kann. Wird die Biomasse in der Vortrocknungszone zusätzlich noch mit einer Auflockerungseinrichtung aufgelockert, so kann die Gegenstromdurchlüftung, -trocknung, - anwärmung noch effizienter erfolgen. Auch hierdurch kann die Schütthöhe (Schichtdicke) der Biomasse, welche in die Vortrocknungszone eingeführt wird, deutlich angehoben werden und die zum Trocknen eingesetzte Energie besser ausgenutzt werden, da warme nicht verklumpte Biomasse bekanntermaßen schneller trocknet als kalte verdichtete Biomasse.

Die im Gegenstrom zur Förderrichtung der Biomasse durch die Vortrocknungszone geströmte Luft tritt dann am Anfang der Vortrocknungszone - gesehen in Förderrichtung der Fördereinrichtung der Vortrocknungszone - aus dem Mehrzonentrockner aus. Der Austritt der stark mit Feuchtigkeit angereicherten Luft kann über freie Konfektion und/oder mittels Luftfördereinrichtungen wie beispielsweise Gebläse, Ventilatoren oder Pumpen abgeleitet werden. Die Anbringung eines Kamins kann ebenfalls einer besseren Ableitung der Luft zuträglich sein. In einer solchen Ablufteinrichtung (Kamin) können beispielsweise die zuvor genannten Luftfördereinrichtungen angeordnet sein. Zugleich dient die Ablufteinrichtung (Kamin) der Entstaubung des Trocknungsmediums, da die kondensierende Abluft den Staub bindet.

Eine weitere Entstaubung des Trocknungsmediums findet bereits in der Vortrocknungszone statt, da bei der feuchten Luft mit abnehmender Temperatur, d.h. während des Abkühlens der Luft und der gleichzeitigen Erwärmung der Biomasse, die Kondesationsneigung zunimmt, wobei die in der Luft befindlichen Staubteilchen als Kondensationskerne wirken und so bevorzugt auf die Biomasse absinken bzw. von der Biomasse, die im Gegenstrom zur Trocknungsluft befördert wird, aus der Luft herausgefiltert werden. Durch die Ausbildung eines Gegenstroms der Biomasse mit dem Trocknungsmedium kann also auf zusätzliche Filter weitestgehend verzichtet werden, was zu einer weiteren Vereinfachung des Biomassetrockners führt.

Die so abgeleitete hochfeuchte Luft kann dann an die Umgebung abgegeben werden, wobei vorzugsweise die Restwärme der feuchten Luft zur Erwärmung frischer trockener Luft ausgenutzt wird. Die abgeleitete Luft kann aber auch einem Luftaufbereitungssystem zugeführt werden, sodass ein geschlossener Kreislauf, in dem das Trocknungsmedium strömt, gebildet werden kann. Hierzu muss dem aus dem Mehrzonentrockner ausgeleiteten Luftstrom die von der Biomasse an das Trocknungsmedium abgegebene Feuchtigkeit wieder entzogen werden und der entfeuchteten Luft wieder Wärme zugegeben werden.

Das erfindungsgemäße Verfahren zur Trocknung feuchter Biomasse verwendet einen Mehrzonentrockner mit einer Vortrocknungs- und einer Endtrocknungszone, bei dem feuchte Biomasse der Vortrocknungszone zugeführt wird und getrocknete Biomasse von der Endtrocknungszone aus dem Mehrzonentrockner 1 abgeführt wird. Das dabei verwendete Trocknungsmedium, bevorzugt Luft, durchströmt nach Einlass in der Nähe der Endtrocknungszone zunächst im Kreuzstrom die durch die Endtrocknungszone geförderte Biomasse und durchströmt weiter im Gegenstrom die durch die Vortrocknungszone hindurchtransportierte Biomasse.

Zur Verbesserung der Vortrocknung der Biomasse in der Vortrocknungszone können Auflockerungseinheiten eingesetzt werden, die die Biomasse während des Transports durch die Vortrocknungszone auflockern, so dass dicke Schichten oder Klumpen oder sonstige physikalische Zusammenschlüsse von den Auflockerungseinheiten aufgebrochen werden. Damit wird eine Oberflächenvergrößerung der Biomasse erreicht und die an der Biomasse vorbeiströmende Luft hat mehr Angriffsfläche, um der Biomasse besser Feuchte entziehen zu können. Dies hat nicht nur den Vorteil, dass die Biomasse schneller getrocknet werden kann, sondern hat auch den Vorteil, dass die Biomasse gleichmäßiger in der Vortrocknungszone vorgetrocknet wird. Gleichzeitig lässt sich durch Einsatz der Auflockerungseinrichtungen eine kompaktere Bauweise des Mehrzonentrockners erreichen.

Wie auch in der Vortrocknungszone, so können auch in der Endtrocknungszone Auflockerungseinheiten mit demselben Zweck eingesetzt werden. Auch in der Endzone bietet sich der im Kreuzstrom die Biomasse durchströmenden Luft dann eine größere Angriffsfläche, um der Biomasse die Feuchtigkeit schneller zu entziehen.

Ausgehend davon, dass es sich bei der zu trocknenden Biomasse sowohl um feine bzw. fein gemahlene als auch große Erntegüter, Presslinge, geschredderte Biomasse, Biomasse-Brei und ähnliches handeln kann, ist das erfindungsgemäße Verfahren so ausgelegt, dass die Luft bei Eintritt in die Endtrocknungszone in ihrer Menge und Temperatur regelbar und in ihrer Richtung und Geschwindigkeit z. B. durch Luftförder- und Luftführungseinrichtungen steuerbar ist. So kann die Luft je nach Art der Biomasse flexibel angepasst werden.

Nachdem die Luft mittels eines, im Trockner existierenden Sogs zunächst die Endtrocknungszone im Kreuzstrom und im Anschluss die Vortrocknungszone im Gegenstrom durchströmt hat, wird diese schließlich in der Vortrocknungszone vorzugsweise im Anfangsbereich der Vortrocknungszone abgeführt.

Das erfindungsgemäße Verfahren erfolgt ferner im Niedrigtemperaturbereich. Das hat zur Folge, dass eine Temperatur zwischen 60°C und 130°C angewendet werden kann, und so Beschädigungen an der Biomasse vermieden werden. Aufgrund der vergleichsweise niedrigen Temperatur wird zudem wenig Energie verbraucht. Dabei kann bspw. Abwärme aus z.B. Biogasanlagen oder Industrieanlagen, Solarenergie und/oder andere regenerative Energie genutzt werden.

Zur Ausführung des Verfahrens gemäß Anspruch 1 wird ein Trockner verwendet, welcher in zwei Zonen, in eine Vortrocknungs- und Endtrocknungszone unterteilt ist. Dabei weist die Vortrocknungszone sowohl den Einlass der Biomasse als auch eine Abfuhreinrichtung der vorzugsweise gesättigten feuchten Luft auf, während die Endtrocknungszone den Auslass für die getrocknete Biomasse sowie die Zufuhreinrichtung der ungesättigten trockenen und warmen Luft bereitstellt. Die Biomasse wird ausgehend vom ihrem Einlass in der Vortrocknungszone bis zu ihrem Auslass in der Endtrocknungszone mittels mehrerer Fördereinrichtungen durch die beiden Zonen hindurchtransportiert. Dabei kann die Biomasse zumindest in der Vortrocknungszone durch mindestens eine Auflockerungseinheit 7 umgewälzt werden.

Die Vortrocknungszone zeichnet sich dadurch aus, dass sie einen Einlass aufweist, der die feuchte/nasse Biomasse dem Trockner zuführt. Dabei muss der Einlass so gestaltet sein, dass jede Art von Biomasse auf die Fördereinrichtung der Vortrocknungszone gelangt, ohne die Biomasse zu beschädigen oder einen Massestau zu verursachen. Des Weiteren ist eine Luftabfuhreinrichtung in der Vortrocknungszone so angebracht, dass feuchte Luft bei Erreichen ihrer Maximalfeuchte aus der Vortrocknungszone abgeführt wird.

Bei der Abfuhreinrichtung handelt es sich bevorzugt um einen Kamin, der z. B. dafür sorgt, dass sich im Trockner ein Sog bildet, der wiederum dafür sorgt, dass die Luft durch den Trockner - speziell im Gegenstrom durch die Vortrocknungszone und im Kreuzstrom durch die Endtrocknungszone - strömt.

Die Vortrocknungszone weist außerdem zumindest eine Auflockerungseinheit auf, die z. B. in Form einer Schaufel oder in Form einer Spindel für ein Durchmischen der Biomasse als auch für die Regulieren der Schütthöhe der Biomasse auf der Fördereinrichtung der Vortrocknungszone zuständig sein kann. Die Vortrocknungszone endet an der Stelle, an der die Biomasse an die Fördereinrichtung der Endtrocknungszone weitergeleitet wird.

Die Endtrocknungszone ist so angeordnet, dass sie von der Stelle der Übergabe der vorgetrockneten Biomasse aus der Vortrocknungszone bis zum Auslass der Biomasse aus dem Trockner reicht. Bei dem Auslass der Biomasse aus dem Biomassetrockner handelt es sich oftmals um eine Weiterleitung der getrockneten Biomasse von der Fördereinrichtung der Endtrocknungszone in eine Lagerungs- bzw. Transporteinheit. Benachbart zum Auslass der Biomasse wird in der Endtrocknungszone trockene warme Luft in den Trockner eingebracht.

Die Zuführung des Trocknungsmediums, z. B. der Luft, erfolgt derart, dass das Trocknungsmedium die Biomasse im Endtrocknungsbereich im Kreuzstrom, das bedeutet quer zur Förderrichtung der Biomasse, d. h. von unten nach oben und/oder von oben nach unten, durchströmt. Bevorzugt, wird das Trocknungsmedium zunächst einer Zufuhreinrichtung unterhalb der Endtrocknungszone von außen zugeführt und durch Führungseinrichtungen im Kreuzstrom durch das Förderband und die Biomasse in die Endtrocknungszone eingeführt.

Bei den Führungseinrichtungen, welche bspw. unterhalb der Endtrocknungszone angeordnet sind, handelt es sich bspw. um Fächer, Luftleitblöcke oder Klappen, welche vertikal zum Förderband der Endtrocknungszone und quer zur Förderrichtung der Biomasse angeordnet sind. Anhand dieser Luftführungseinrichtungen ist es möglich, jederzeit Einfluss auf die Strömungsrichtung und/oder die Strömungsgeschwindigkeit des Trocknungsmediums zu nehmen, indem man die Stellung dieser Luftführungseinrichtungen bzgl. der Fördereinrichtung verändert. So können beispielsweise nur gering geöffnete Lufteinrichtungen dafür sorgen, dass nur ein geringer Strom an Trocknungsmedium an einer bestimmten Stelle in den Trockner gelangt. Ebenso kann mit der Winkelstellung der einzelnen Luftführungseinrichtungen die Richtung des in die Endtrocknungszone einfließenden Stroms am Trocknungsmedium beeinflusst werden. Aber auch die Längenänderung von z. B. Luftleitblöcken kann die Luftströmung in unterschiedlichen Bereichen verändern.

Dem Anwender wird hierdurch ermöglicht, flexibel auf verschiedene Arten von Gütern zu reagieren. Handelt es sich beispielsweise um eine Trocknung von hauptsächlich leichtem Gut, wie Blätter und Gras, so kann die Menge und die Geschwindigkeit des Trocknungsmediums herabgesetzt werden, so dass das schnell trocknende Gut nicht unnötig stark belastet wird. Dieser Vorteil der Regelung der Luft ist dadurch gegeben, dass es sich bei dem Trocknungsmedium des erfindungsgemäßen Verfahrens um ein einziges Trocknungsmedium handelt, das beide Zonen nacheinander durchströmt. Insofern wirkt sich die Regelung der Luft anhand der Luftführungseinrichtungen unterhalb der Endtrocknungszone auf den gesamten Trockner aus. Das hat zur Folge, dass die Trocknungskapazität des Trocknungsmediums in dem Verfahren gemäß der Erfindung gegenüber dem Verfahren aus dem Stand der Technik vollständig ausgeschöpft werden kann.

In der Endtrocknungszone können ebenfalls, wie in der Vortrocknungszone Auflockerungseinheiten angebracht sein. Bei diesen Einheiten handelt es sich beispielsweise um Besen, die die Biomasse auflockern und durchmischen. Zumindest die Auflockerungseinheit, die vor dem Übergang der Biomasse von der Vortrocknungs- in die Endtrocknungszone angeordnet ist, kann höhenverstellbar eingerichtet sein, da diese für die Einstellung der Schütthöhe bzw. Schüttmenge zuständig sein kann. Ferner bietet es sich an innerhalb des Übergangsbereiches der Biomasse von der Vortrocknungs- in die Endtrocknungszone an, eine Auflockerungseinheit anzuordnen, um gegebenenfalls die Biomasse während des Überganges (Hinunterfallen) durchzumischen. Dies erfolgt vorzugsweise in Kombination mit einer Biomasseführungseinrichtung und/oder einer Luftführungs- bzw. Luftfördereinrichtung.

Aufgrund der verschiedenen Arten der Auflockerungseinheiten, die im erfindungsgemäßen Verfahren Anwendung finden können, wie Besen, Bürsten, Bleche, Stifte, Noppen, Haken, Messer, Schlegel und/oder Schaufeln, und der Anbringung der Auflockerungseinheiten verteilt in der Vortrocknungszone und gegebenenfalls auch in der Endtrocknungszone, erfolgt eine stetige Umwälzung/Aufwirbelung der Biomasse, so dass bei der Förderung der Biomasse durch die Fördereinrichtungen in den beiden Trocknungszonen die gesamte Biomasse gleichmäßig getrocknet wird.

Die Fördereinrichtungen beider Zonen, bei welchen es sich vorzugsweise um Förderbänder handelt, sind in ihrer Geschwindigkeit individuell regelbar. Was einen großen Vorteil gegenüber Trocknern mit nur einem Förderband bringt. Abhängig von der Gutdichte, Gutmenge, Gutart, etc. kann das Förderband der Vortrocknungszone schneller, langsamer oder gleich dem Förderband der Endtrocknungszone eingestellt werden. Handelt es sich beispielsweise beim Trocknen um einen Herstellungsschritt, um Brennstoffpellets aus Biomasse herzustellen, so liegt die Biomasse am Einlass des Trockners möglicherweise in Form eines verdichteten Presskuchens vor. Das hat zur Folge, dass der Biomassepresskuchen stark aufgelockert werden muss, um eine längere Vortrocknungszeit zu vermeiden. Das Förderband der Vortrocknungszone kann in diesem Fall langsamer laufen als das Band der Endtrocknungszone. Die Vortrocknungszone dient dann als ein integrierter Trocknungsbunker und sorgt für eine längere Verweilzeit der Luft in der Biomasse. Gleichzeitig kann durch eine erhöhte Geschwindigkeit des Förderbandes der Endtrocknungszone die Biomasse beim Übergang von der Vortrocknungszone in die Endtrocknungszone gleichmäßig in geringer Schütthöhe auf das Förderband in der Endtrocknungszone verteilt werden.

Ein weiterer Vorteil von zwei getrennten Förderbändern liegt darin, dass die Materialien der Bänder auf den in der jeweiligen Trocknungszone herrschenden Luftstrom abgestimmt werden können. So handelt es sich bei dem Förderband der Endtrocknungszone, welches im Kreuzstrom durchströmt wird, um ein vorzugsweise perforiertes Förderband, beispielsweise aus Kunststoff. Wohingegen das Förderband der Vortrocknungszone, welches im Gegenstrom überströmt wird, luftundurchlässig sein kann, wie beispielsweise ein Gummi- oder Metallband. Damit kann auch möglichen Luftverlusten oder Luftströmungskurzschlüssen zwischen dem Kreuzstrom der Luft in der Endtrocknungszone und dem Gegenstrom der Luft in der Vortrocknungszone entgegen gewirkt werden. Ein luftdurchlässiges Förderband in der Vortrocknungszone ist aber genauso anordbar wie ein luftundurchlässiges Förderband in der Endtrocknungszone. Hierbei kommt dann ein Kreuzstrom-Effekt in der Vortrocknungszone hinzu, und das Trockengut in der Endzone würde stärker im Kreuzstrom umströmt.

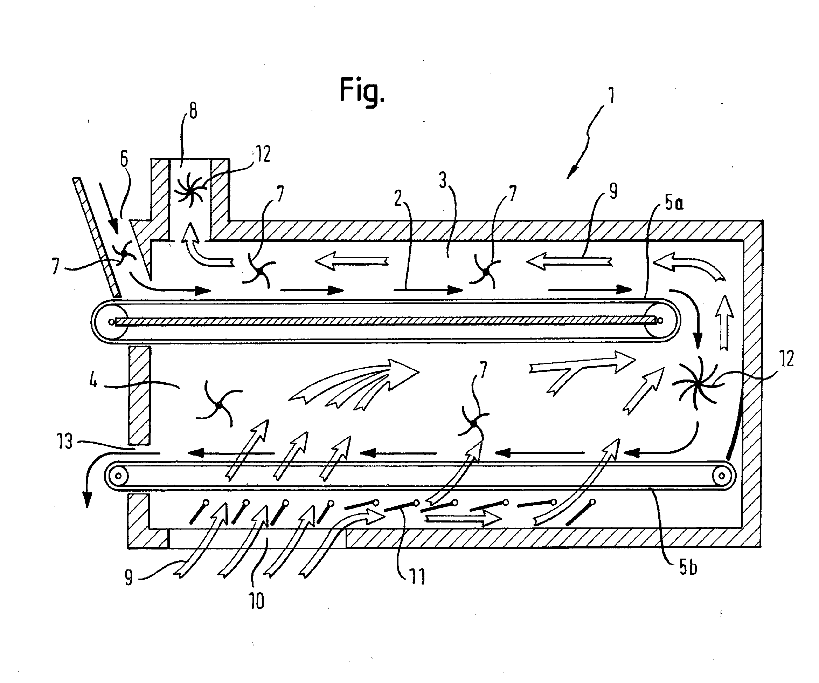

Die Erfindung soll nun anhand eines Ausfertigungsbeispiels in einer beiliegenden Figur näher beschrieben werden. Die Figur zeigt hierbei den prinzipiellen Aufbau einer erfindungsgemäßen Vorrichtung in einer Schnittdarstellung zur Durchführung des Verfahrens zur Trocknung von Biomasse 2 mittels eines Trocknungsmediums auf energiesparende, umweltschonende und biomasseschonende Art und Weise.

Die Vorrichtung besteht aus einem Trockner 1, aufgeteilt in eine Vortrocknungszone 3 und eine Endtrocknungszone 4. Durch beide Zonen hierdurch verlaufen jeweils ausgehend vom Anfang der jeweiligen Zone Förderbänder 5a und 5b, wobei die Förderbänder 5a und 5b übereinander angeordnet sind.

Am Anfang der Vortrocknungszone 3 befindet sich ein Einlass 6 für die Zugabe der Biomasse 2, dargestellt durch durchgezogene Pfeile, in den Trockner 1. Die auf das Förderband 5a der Vortrocknungszone aufgebrachte Biomasse 2 wird mittels einer Auflockerungseinheit 7 aufgelockert, so dass beispielsweise zerkleinerte Biomasse 2 in Form von Presskuchen aufgelockert und gleichmäßig auf dem Förderband 5a verteilt wird. Auf diese Weise kann die Schütthöhe der Biomasse 2 auf dem Förderband 5a reguliert werden. Weitere Auflockerungseinheiten 7, z. B. Schaufeln, sind über die gesamte Länge des Förderbandes 5a verteilt, damit die Biomasse 2 bis zum Ende der Vortrocknungszone 3 mehrmals aufgelockert und umgedreht bzw. gewendet wird. Beispielsweise kann die erste Auflockerungseinheit 7 so angeordnet sein, dass die Biomasse 2 bei der ersten Auflockerungseinheit 7 nur aufgelockert wird. Der durch die Vortrocknungszone 3 strömende Gegenstrom (dargestellt in waagrechten Doppel-Pfeilen) wird bevorzugt noch vor der ersten Auflockerungseinheit 7 durch eine Luftabfuhreinrichtung 8, einem Kamin, aus dem Trockner 1 abgeführt.

Nachdem die Biomasse 2 von Beginn der Vortrocknungszone 3 durch diese hindurch bis zu dessen Ende auf dem Förderband 5a gefördert wird, um dann in die Endtrocknungszone 4 zu gelangen, strömt der Luftstrom entgegengesetzt der Förderrichtung der Biomasse 2. Die Luft, die bereits Feuchtigkeit in der Endtrocknungszone 4 aufgenommen hat, strömt, ggf. durch Luftfördereinrichtungen unterstützt, in die Vortrocknungszone 3, wo sie letztendlich abgeführt wird.

Aufgrund der übereinander angeordneten Förderbänder 5a und 5b fällt die Biomasse 2 am Ende des Förderbandes 5a auf das darunterliegende Förderband 5b, wobei die Biomasse 2 während des Herunterfallens von einer weiteren Auflockerungseinheit 7, z. B. in Form eines Besens, durchgemischt werden kann. Der Besen 7 kann so unterhalb des Förderbandes 5a angeordnet sein, dass gleichzeitig das Förderband 5a gereinigt wird.

Sobald die Biomasse 2 die Endtrocknungszone 4 erreicht hat und auf dem Förderband 5b angekommen ist, wird die Biomasse 2 mindestens ein weiteres Mal mittels einer Auflockerungseinheit 7 durchgemischt und aufgelockert und gleichzeitig die Schütthöhe für das folgende Durchlaufen der Endtrocknungszone 4 reguliert. Im Verlauf der Endtrocknungszone 4 sind weitere Auflockerungseinheiten 7 angeordnet. Die Biomasse 2 wird während der Förderung auf dem Band 5b durch die Endtrocknungszone 4 durch einen Luftstrom im Kreuzstrom endgetrocknet. Dabei wird die Luft im Kreuzstrom zur Förderrichtung der Biomasse 2 durch eine unterhalb der Endtrocknungszone 4 angeordnete Luftzufuhreinrichtung 10 von unten dem Trockner 1 zugeführt. Die Luft wird zunächst der Luftzufuhreinrichtung 10 unterhalb des Förderbandes 5b zugeführt und dann mittels der, am Übergang zwischen Luftzufuhreinrichtung 10 und Endtrocknungszone 4 angebrachten, Luftführungseinrichtungen 11, in Form von Fächern oder Klappen, der Endtrocknungszone 4 im Kreuzstrom zugeführt. Der Luftstrom in den Trockner 1 kann dabei reguliert und gesteuert werden.

Am Ende des Förderbandes 5b und damit am Ende der Endtrocknungszone 4 erfolgt die Abgabe der getrockneten Biomasse 2 durch einen Auslass 13 aus dem Trockner 1 heraus.

### Bezugszeichenliste:

- 1: Trockner
- 2: Biomasse
- 3: Vortrocknungszone
- 4: Endtrocknungszone
- 5a: Förderband der Vortrocknungszone
- 5b: Förderband der Endtrocknungszone
- 6: Biomasse-Einlass
- 7: Auflockerungseinheit
- 8: Trocknungsmedium-Abfuhreinrichtung
- 9: Trocknungsmedium
- 10: Trocknungsmedium-Zufuhreinrichtung
- 11: Trocknungsmedium-Führungseinrichtung
- 12: Trocknungsmedium-Fördereinrichtung
- 13: Biomasse-Auslass

## Patentansprüche

1. Verfahren zur Trocknung feuchter Biomasse (2) mit einem Trocknungsmedium (9) in einem Mehrzonentrockner (1) mit einer Vortrocknungszone (3), in die die feuchte Biomasse (2) zugeführt wird, und einer Endtrocknungszone (4), aus der die getrocknete Biomasse abgeführt wird, bei welchem Verfahren das Trocknungsmedium (9) die Biomasse (2) zuerst in der Endtrocknungszone (4) auf der Fördereinrichtung (5b) der Endtrocknungszone (4) quer zur Förderrichtung der Biomasse im Kreuzstrom durchströmt, **dadurch gekennzeichnet, dass** das Trocknungsmedium (9) anschließend, entgegengesetzt der Förderrichtung der Biomasse auf der Fördereinrichtung der Vortrocknungszone (3), im Gegenstrom durch die Vortrocknungszone (3) strömt, wobei die Biomasse (2) zumindest in der Vortrocknungszone (3) mittels Auflockerungseinheiten (7) aufgelockert wird.

2. Verfahren nach Anspruch 1, **dadurch gekennzeichnet, dass** das Trocknungsmedium (9) der Biomasse (2) in der Endtrocknungszone (4) von unten zugeführt wird.

3. Verfahren nach Anspruch 1 oder 2, **dadurch gekennzeichnet, dass** die Biomasse (2) während der Förderung durch die Endtrocknungszone aufgelockert wird.

4. Verfahren nach einem der Ansprüche 1 bis 3, **dadurch gekennzeichnet, dass** die Temperatur, die Mengenzufuhr, die Strömungsgeschwindigkeit und die Richtung des Trocknungsmediums (9) in der Endtrocknungszone (4) geregelt werden.

5. Verfahren nach einem der Anspruch 1 bis 4, **dadurch gekennzeichnet, dass** das Trocknungsmedium (9) aus der Vortrocknungszone so abgeführt wird, dass dessen Strömungsgeschwindigkeit zunimmt.

6. Verfahren nach einem der Ansprüche 1 bis 5, **dadurch gekennzeichnet, dass** es sich um ein Niedrigtemperaturverfahren handelt.

7. Vorrichtung zur Trocknung feuchter Biomasse (2) mittels eines Trocknungsmediums (9) mit einer Vortrocknungszone (3), die einen Einlass für die Biomasse (2) und eine Luftabfuhreinrichtung zum Abführen des Trocknungsmediums (9) aufweist, mit einer Endtrocknungszone (4), die einen Auslass zum Abführen der Biomasse (2) und eine Trocknungsmedium-Zufuhreinrichtung (10) zur Zufuhr des Trocknungsmediums (9) aufweist, wobei die Vortrocknungs- und die Endtrocknungszone (4) jeweils eine Fördereinrichtung zur Förderung der Biomasse (2) aufweisen, wobei die Fördereinrichtung der Vortrocknungszone (3) zur Förderung der feuchten Biomasse (2) durch die Vortrocknungszone (3) bis zur Endtrocknungszone (4) und die Fördereinrichtung der Endtrocknungszone (4) zur Förderung der Biomasse (2) zum Auslass ausgelegt ist, sowie mit zumindest einer Auflockerungseinheit (7) zum Auflockern der Biomasse (2) in der Vortrocknungszone (3), sowie mit einer Trocknungsmedium-Führungseinrichtung (11) zur Führung des Trocknungsmediums (9), die das Trocknungsmedium (9) in der Endtrocknungszone (4) quer zur Förderrichtung der Biomasse auf der Fördereinrichtung (5b) der Endtrocknungszone (4) im Kreuzstrom führt, **dadurch gekennzeichnet, dass** die Trocknungsmedium-Führungseinrichtung (11) das Trocknungsmedium (9) in der Vortrocknungszone (3) entgegengesetzt der Fördereinrichtung der Biomasse auf der Fördereinrichtung der Vortrocknungszone im Gegenstrom durch die Vortrocknungszone führt.

8. Vorrichtung nach Anspruch 7, **dadurch gekennzeichnet, dass** eine weitere Auflockerungseinheit (7) in der Endtrocknungszone vorgesehen ist.

9. Vorrichtung nach Anspruch 7 oder 8, **dadurch gekennzeichnet, dass** die Geschwindigkeit v₁ der Fördereinrichtung der Endtrocknungszone und die Geschwindigkeit v₂ der Fördereinrichtung der Vortrocknungszone (3) regelbar sind.

10. Vorrichtung nach Anspruch 9, **dadurch gekennzeichnet, dass** v₁ größer als v₂ ist.

11. Vorrichtung nach einem der Ansprüche 7 bis 10, **dadurch gekennzeichnet, dass** die Fördereinrichtung der Endtrocknungszone (4) ein perforiertes Förderband ist.

12. Vorrichtung nach einem der Ansprüche 7 bis 11, **dadurch gekennzeichnet, dass** die Fördereinrichtung der Vortrocknungszone (3) ein luftundurchlässiges Förderband ist.

13. Vorrichtung nach einem der Ansprüche 7 bis 12, **dadurch gekennzeichnet, dass** die Auflockerungseinheiten (7) höhenverstellbar sind.

14. Vorrichtung nach einem der Ansprüche 7 bis 13, **dadurch gekennzeichnet, dass** die Trocknungsmedium-Zuführungseinrichtung verstellbare Trocknungsmedium-Führungseinrichtungen (11) aufweist.

## Claims

1. Method for drying moist biomass (2) using a drying medium (9) in a multizone dryer (1), having a predyring zone (3) into which the moist biomass (2) is fed, and a final drying zone (4) from which the dried biomass is removed, in which method the drying medium (9) first flows through the biomass (2) in the final drying zone (4) on the conveying appliance (5b) of the final drying zone (4) transversely to the conveying direction of the biomass in crossflow, **characterized in that** the drying medium (9) then flows in counterflow through the predrying zone (3) in opposite direction to the conveying direction of the biomass on the conveying appliance of the predrying zone (3), wherein the biomass (2), at least in the predrying zone (3), is loosened by means of loosening units (7).

2. Method according to Claim 1, **characterized in that** the drying medium (9) is fed from the bottom to the biomass (2) in the final drying zone (4).

3. Method according to Claim 1 or 2, **characterized in that** the biomass (2) is loosened during the conveying through the final drying zone.

4. Method according to any one of Claims 1 to 3, **characterized in that** the temperature, the rate of feed, the flow velocity and the direction of the drying medium (9) in the final drying zone (4) are controlled.

5. Method according to any one of Claims 1 to 4, **characterized in that** the drying medium (9) is removed from the predrying zone in such a manner that the flow velocity thereof increases.

6. Method according to any one of Claims 1 to 5, **characterized in that** it is a low-temperature method.

7. Device for drying moist biomass (2) by means of a drying medium (9), having a predrying zone (3) which has an intake for the biomass (2) and an air removal appliance for removing the drying medium (9), having a final drying zone (4) which has an outlet for removing the biomass (2) and a drying medium feed appliance (10) for feeding the drying medium (9), wherein the predrying zone and the final drying zone (4) each have a conveying appliance for conveying the biomass (2), wherein the conveying appliance of the predrying zone (3) is designed for conveying the moist biomass (2) through the predrying zone (3) up to the final drying zone (4), and the conveying appliance of the final drying zone (4) is designed for conveying the biomass (2) to the outlet, and also having at least one loosening unit (7) for loosening the biomass (2) in the predrying zone (3), and also having a drying medium guiding appliance (11) for guiding the drying medium (9) which guides the drying medium (9) in the final drying zone (4) transversely to the conveying direction of the biomass on the conveying appliance (5b) of the final drying zone (4) in crossflow, **characterized in that** the drying medium guiding appliance (11) guides the drying medium (9) in the predrying zone (3) in the opposite direction to the conveying direction of the biomass on the conveying appliance of the predrying zone in counterflow through the predrying zone.

8. Device according to Claim 7, **characterized in that** a further loosening unit (7) is provided in the final drying zone.

9. Device according to Claim 7 or 8, **characterized in that** the velocity v₁ of the conveying appliance of the final drying zone and the velocity v₂ of the conveying appliance of the predrying zone (3) are controllable.

10. Device according to Claim 9, **characterized in that** v₁ is greater than v₂.

11. Device according to any one of Claims 7 to 10, **characterized in that** the conveying appliance of the final drying zone (4) is a perforated conveyor belt.

12. Device according to any one of Claims 7 to 11, **characterized in that** the conveying appliance of the predrying zone (3) is an air-impermeable conveyor belt.

13. Device according to any one of Claims 7 to 12, **characterized in that** the loosening units (7) are height-adjustable.

14. Device according to any one of Claims 7 to 13, **characterized in that** the drying medium feed appliance has adjustable drying medium guiding appliances (11).

## Revendications

1. Procédé de séchage de biomasse humide (2) avec un milieu de séchage (9) dans un sécheur à plusieurs zones (1) comprenant une zone de pré-séchage (3) dans laquelle la biomasse humide (2) est acheminée, et une zone de séchage final (4) hors de laquelle la biomasse séchée est évacuée, dans lequel procédé le milieu de séchage (9) traverse la biomasse (2) d'abord dans la zone de séchage final (4) sur le dispositif de transport (5b) de la zone de séchage final (4) transversalement à la direction de transport de la biomasse dans un flux croisé, **caractérisé en ce que** le milieu de séchage (9) s'écoule ensuite à contre-courant, dans le sens opposé au sens de transport de la biomasse sur le dispositif de transport de la zone de pré-séchage (3), à travers la zone de pré-séchage (3), la biomasse (2) étant au moins désagrégée dans la zone de pré-séchage (3) au moyen d'unités de désagrégation (7).

2. Procédé selon la revendication 1, **caractérisé en ce que** le milieu de séchage (9) de la biomasse (2) est acheminé par le bas dans la zone de séchage final (4).

3. Procédé selon la revendication 1 ou 2, **caractérisé en ce que** la biomasse (2) est désagrégée pendant le transport à travers la zone de séchage final.

4. Procédé selon l'une quelconque des revendications 1 à 3, **caractérisé en ce que** la température, la quantité acheminée, la vitesse d'écoulement et le sens du milieu de séchage (9) sont régulés dans la zone de séchage final (4).

5. Procédé selon l'une quelconque des revendications 1 à 4, **caractérisé en ce que** le milieu de séchage (9) est évacué de la zone de pré-séchage de telle sorte que sa vitesse d'écoulement augmente.

6. Procédé selon l'une quelconque des revendications 1 à 5, **caractérisé en ce qu'**il s'agit d'un procédé à basse température.

7. Dispositif de séchage de biomasse humide (2) au moyen d'un milieu de séchage (9) comprenant une zone de pré-séchage (3), qui présente une entrée pour la biomasse (2) et un dispositif d'évacuation d'air pour évacuer le milieu de séchage (9), comprenant une zone de séchage final (4) qui présente une sortie pour évacuer la biomasse (2) et un dispositif d'alimentation en milieu de séchage (10) pour l'alimentation en milieu de séchage (9), la zone de pré-séchage et la zone de séchage final (4) présentant à chaque fois un dispositif de transport pour le transport de la biomasse (2), le dispositif de transport de la zone de pré-séchage (3) étant conçu pour transporter la biomasse humide (2) à travers la zone de pré-séchage (3) jusqu'à la zone de séchage final (4) et le dispositif de transport de la zone de séchage final (4) étant prévu pour transporter la biomasse (2) jusqu'à la sortie, et comprenant au moins une unité de désagrégation (7) pour désagréger la biomasse (2) dans la zone de pré-séchage (3), ainsi qu'un dispositif de guidage de milieu de séchage (11) pour guider le milieu de séchage (9), lequel guide le milieu de séchage (9) dans la zone de séchage final (4) transversalement à la direction de transport de la biomasse sur le dispositif de transport (5b) de la zone de séchage final (4) dans un flux croisé, **caractérisé en ce que** le dispositif de guidage de milieu de séchage (11) guide le milieu de séchage (9) dans la zone de pré-séchage (3) dans le sens opposé au dispositif de transport de la biomasse sur le dispositif de transport de la zone de pré-séchage à contre-courant à travers la zone de pré-séchage.

8. Dispositif selon la revendication 7, **caractérisé en ce qu'**une unité de désagrégation supplémentaire (7) est prévue dans la zone de séchage final.

9. Dispositif selon la revendication 7 ou 8, **caractérisé en ce que** la vitesse v₁ du dispositif de transport de la zone de séchage final et la vitesse v₂ du dispositif de transport de la zone de pré-séchage (3) peuvent être régulées.

10. Dispositif selon la revendication 9, **caractérisé en ce que** v₁ est supérieure à v₂.

11. Dispositif selon l'une quelconque des revendications 7 à 10, **caractérisé en ce que** le dispositif de transport de la zone de séchage final (4) est une bande de transport perforée.

12. Dispositif selon l'une quelconque des revendications 7 à 11, **caractérisé en ce que** le dispositif de transport de la zone de pré-séchage (3) est une bande de transport imperméable à l'air.

13. Dispositif selon l'une quelconque des revendications 7 à 12, **caractérisé en ce que** les unités de désagrégation (7) peuvent être réglées en hauteur.

14. Dispositif selon l'une quelconque des revendications 7 à 13, **caractérisé en ce que** le dispositif d'alimentation en milieu de séchage présente des dispositifs de guidage de milieu de séchage réglables (11).
